# EUROPÄISCHE PATENTSCHRIFT

(11) **EP 1 964 690 B1**
(45) Veröffentlichungstag und Bekanntmachung des Hinweises auf die Patenterteilung: **13.02.2013**
(21) Anmeldenummer: 08450026.3
(22) Anmeldetag: 29.02.2008
(51) Int. Cl.: B60B 3/06, B60B 21/02, B60B 21/10

(54) **Gussrad sowie Gussform zur Herstellung eines Gussrads**
Moulded wheel and mould for creating a moulded wheel
Roue en fonte et moule en fonte destiné à la fabrication d'une roue en fonte

(30) Priorität: 01.03.2007 AT 1262007 U
(43) Veröffentlichungstag der Anmeldung: 03.09.2008
(73) Patentinhaber: Austria Alu-Guss-Gesellschaft m.b.H., 5282 Braunau-Ranshofen (AT)
(72) Erfinder: Gartner, Josef, 4962 Mining (AT)
(74) Vertreter: Sonn & Partner Patentanwälte

(56) Entgegenhaltungen:
- GB-A- 841 469
- GB-A- 2 249 063
- US-A- 1 974 534
- US-A- 4 165 131
- US-A- 5 548 896
- US-A- 5 826 949

## Beschreibung

Die Erfindung betrifft ein Gussrad mit einem an einen Felgenkörper anschließenden vorderen Hornbereich, der über ein Felgenbett mit einem gegenüberliegenden hinteren Hornbereich verbunden ist, der einen umlaufenden, gegenüber dem übrigen Hornbereich verdickten Bund aufweist, wobei der hintere Hornbereich zumindest eine Materialeinsparung aufweist, so dass die Wandstärke des Gussrads im Bereich der Materialeinsparung gegenüber einem umfangseitig benachbarten Bereich verjüngt ist, und die Materialeinsparung zumindest teilweise im Bereich des umlaufenden Bundes angeordnet ist.

Weiters betrifft die Erfindung eine Gussform zur Herstellung eines Gussrads mit einem an einen Felgenkörper anschließenden vorderen Hornbereich, der über ein Felgenbett mit einem gegenüberliegenden hinteren Hornbereich verbunden ist, der einen umlaufenden, gegenüber dem übrigen Hornbereich verdickten Bund aufweist, wobei die Gussform im hinteren Hornbereich zumindest eine Materialerhebung aufweist, so dass die Wandstärke des Gussrads im Bereich der Materialerhebung der Gussform gegenüber einem umfangseitig benachbarten Bereich verjüngt ist.

Um ein Gussrad möglichst geringer Masse herzustellen, wurde bisher danach getrachtet, das Gussrad auch im Bereich des vorderen und hinteren Hornbereichs mit einer möglichst geringen Wandstärke auszubilden.

Gemäß allgemein in der Automobilindustrie entwickelten Vorgaben ist es nunmehr erforderlich, dass Gussräder einer erhöhten Schlagbeanspruchung standhalten. Dies erfordert, dass der hintere Hornbereich mit einer gegenüber dem Felgenbett deutlich erhöhten Wandstärke ausgeführt wird, wodurch nachteiligerweise wiederum die Masse des Gussrads erhöht wird.

Aus der gattungsgemäßen GB 2 249 063 ist es zwar grundsätzlich bekannt, in dem dem vorderen Hornbereich gegenüberliegenden hinteren Hornbereich sich im Wesentlichen in Umlaufrichtung erstreckende Rillen vorzusehen. Durch derartige in sich geschlossene, Rillen-förmige Einbuchtungen soll die Gefahr von Lufteinschlüssen beim Gießen des Gussrades verringert werden. Nachteilig ist hierbei jedoch, dass derartige Rillen-förmige Einbuchtungen das Gussrad im hinteren Hornbereich schwächen.

Aus der US 6 318 446 ist ein Aluminium-Gussrad bekannt, welches Materialeinsparungen zwecks einer Gewichtsreduktion im vorderen Hornbereich aufweist. Derartige Materialeinsparungen können eine umfangsseitig umlaufende Rille im vorderen umlaufenden Bund oder jedoch Umfang-seitig verteilt angeordnete Aussparungen sein.

Auch aus der US 5,548,896 ist bekannt, im Bereich des vorderen Hornbereichs eines Rades Materialeinsparungen vorzusehen.

Aus der US 4,165,131 A ist ein Gussrad aus Leichtmetall bekannt, bei welchem im hinteren Hornbereich Verstärkungen vorgesehen sind, welche in der Form von Rippen auf der Innenseite des Felgenbetts angebracht sind.

Aus der US 5,826,949 ist ein Gussrad bekannt, bei welchem im Felgenbett (an dessen Innen- oder Außenseite) Materialeinsparungen vorgesehen sein können.

Aus der GB 841,469 ist ein andersartiges Flugzeugrad bekannt, welches zwei miteinander verschraubte Felgen sowie integrierte Rolllager aufweist.

Aus der US 1,974,534 ist ein Rad bekannt, bei welchem im Bereich des hinteren Hornbereichs Belüftungs-Öffnungen vorgesehen sind.

Ziel der vorliegenden Erfindung ist es, ein Gussrad der eingangs angeführten Art zu schaffen, welches den erhöhten Anforderungen an eine Schlagbeanspruchung gerecht wird, zugleich jedoch eine vergleichsweise geringe Masse aufweist.

Dies wird erfindungsgemäß bei dem Gussrad der eingangs angeführten Art dadurch erzielt, dass sich der im hinteren, umlaufenden Bund des hinteren Hornbereichs erstreckende Abschnitt der Materialeinsparung von einem radial außenliegenden Scheitelbereich zu einem frei auslaufenden Ende hin nach radial innen erweitert. Hierdurch wird eine Reduzierung des Gewichts des Gussrads erzielt und zugleich die Kraftaufnahme des Gussrads bei schlagend hochdynamischer Belastung optimiert. Durch das Vorsehen derartiger Materialeinsparungen, die sich nach radial innen erweitern, d.h. deren Erstreckung sich in Umfangsrichtung in Draufsicht zur Radmitte hin vergrößert, ist das Gussrad im hinteren Hornbereich weniger steif, so dass ein höheres Energieaufnahmevermögen gegeben ist und somit eine verbesserte Anpassung, insbesondere an eine hochdynamische Schlagbeanspruchung. Zur Erzielung dieses verbesserten Energieaufnahmevermögens ist es insbesondere vorteilhaft, wenn eine Vielzahl von umfangsseitig gleichmäßig verteilt angeordneten Materialeinsparungen vorgesehen ist. Hierbei ist es günstig, wenn alle Materialeinsparungen gleich ausgebildet sind.

Um die Verbindung zwischen dem Gussrad und einem auf dem Gussrad zu befestigenden Reifen nicht zu beeinträchtigen, ist es vorteilhaft, wenn die Materialeinsparungen an einer inneren, von einer Seite zur Aufnahme eines Reifens abgewandten Seite des Gussrads vorgesehen sind.

Tests haben gezeigt, dass es insbesondere vorteilhaft ist, wenn die Materialeinsparungen zumindest teilweise eine Längserstreckungsrichtung aufweisen, welche im Wesentlichen parallel zur Erstreckungsebene des Felgenbetts angeordnet ist, bzw. wenn zusätzlich oder alternativ die Materialeinsparungen zumindest teilweise eine Längserstreckungsrichtung aufweisen, welche im Wesentlichen parallel zur Erstreckungsebene eines einen hinteren, umlaufenden Bund bildenden Abschnitts des hinteren Hornbereichs angeordnet.ist. Insbesondere ist es demzufolge vorteilhaft, wenn die taschenförmigen Materialeinsparungen im Querschnitt im Wesentlichen L-förmig sind. Um das Energieaufnahmevermögen des Gussrads zu optimieren, ist es vorteilhaft, wenn sich die Tiefe der Materialeinsparungen zu dem hinteren Ende des hinteren Hornbereichs erhöht.

Ebenso ist es zur Erreichung der genannten Zielsetzung günstig, wenn sich die Tiefe der Materialeinsparung ausgehend von einem an das Felgenbett anschließenden Bereich geringfügig erhöht und im Bereich des einen hinteren, umlaufendenden Bund bildenden Abschnitts des hinteren Hornbereichs eine im Wesentlichen stufenförmige Vertiefung der Materialeinsparung vorgesehen ist. Hierbei ist es vorteilhaft, wenn sich die Tiefe der Materialeinsparung in dem sich geringfügig erhöhenden Bereich, im Wesentlich geradlinig, inbesondere um ca. 5°, erhöht. Um die Gewichtsersparnis zu optimieren, ist es günstig, wenn im Bereich der Materialeinsparungen im hinteren, umlaufenden Bund des hinteren Hornbereichs das Gussrad konkav gekrümmt ist, wobei der konkav gekrümmte Abschnitt vorteilhafter Weise im Querschnitt im Wesentlichen kreisbogenförmig, vorzugsweise mit einem Radius zwischen .20 und 30 mm, ist.

Weiters hat es sich hinsichtlich eines erhöhten Energieaufnahmevermögens des Gussrads als günstig herausgestellt, wenn der Scheitelbereich kreisbogenförmig, inbesondere mit einem Radius zwischen 10 und 20 mm, ist, wobei vorteilhafterweise sich die Materialeinsparungen anschließend an den kreisbogenförmigen Scheitelbereich im Wesentlichen geradlinig erweitern. Insbesondere hat sich als günstig herausgestellt, wenn die geradlinigen Abschnitte der Materialeinsparungen einen Winkel zwischen 70° und 80°, vorzugsweise von im Wesentlichen 75°, einschließen.

Die Gussform der eingangs angeführten Art ist dadurch gekennzeichnet, dass sie zur Herstellung eines Gussrads gemäß einem der Ansprüche 2 bis 15 geeignet ist. Durch das Vorsehen einer Gussform mit zumindest einer Materialerhebung im hinteren Hornbereich des herzustellenden Gussrads können die vorstehend genannten Vorteile eines höheren Energieaufnahmevermögens des herzustellenden Gussrads sowie der leichteren Bauweise des Gussrads erzielt werden, so dass hinsichtlich der Vorteile der erfindungsgemäßen Gussform auf die vorstehend genannten Ausführungen verwiesen wird.

Die Erfindung wird nachstehend anhand von einem in den Zeichnungen dargestellten bevorzugten Ausführungsbeispiel, auf das sie jedoch nicht beschränkt sein soll, noch näher erläutert. Im Einzelnen zeigen in der Zeichnung:
Fig. 1 eine Ansicht auf einen hinteren Hornbereich eines Gussrads;
Fig. 2 eine perspektivische Ansicht des Gussrads gemäß Fig. 1;
Fig. 3 im Detail Materialeinsparungen im hinteren Hornbereich des Gussrads;
Fig. 4 einen Schnitt gemäß der Linie IV-IV in Fig. 2;
Fig. 5 einen Schnitt gemäß der Linie V-V in Fig. 2;
Fig. 6 eine Schnittansicht einer Gussform im Bereich einer Materialerhebung zur Ausbildung einer Materialeinsparung im Gussrad; und
Fig. 7 einen Schnitt der Gussform in einem Bereich ohne Materialerhebungen.

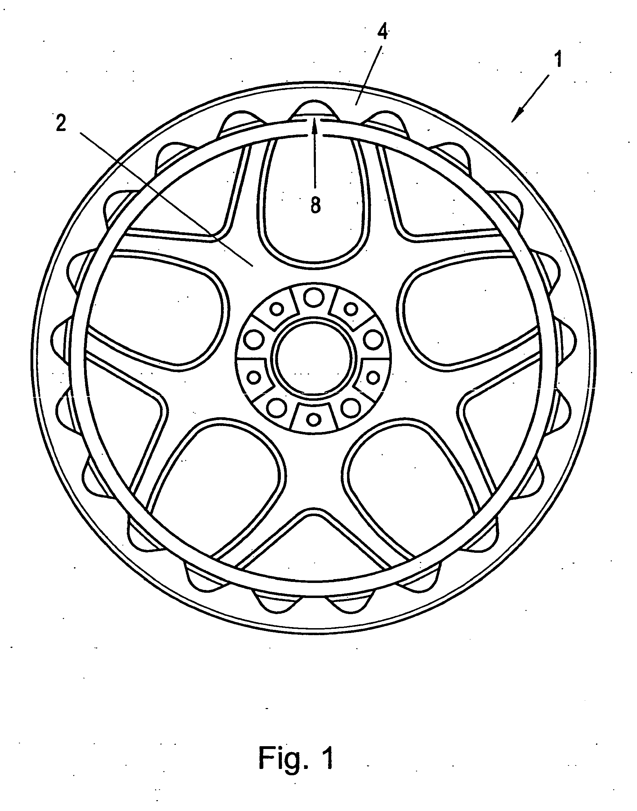

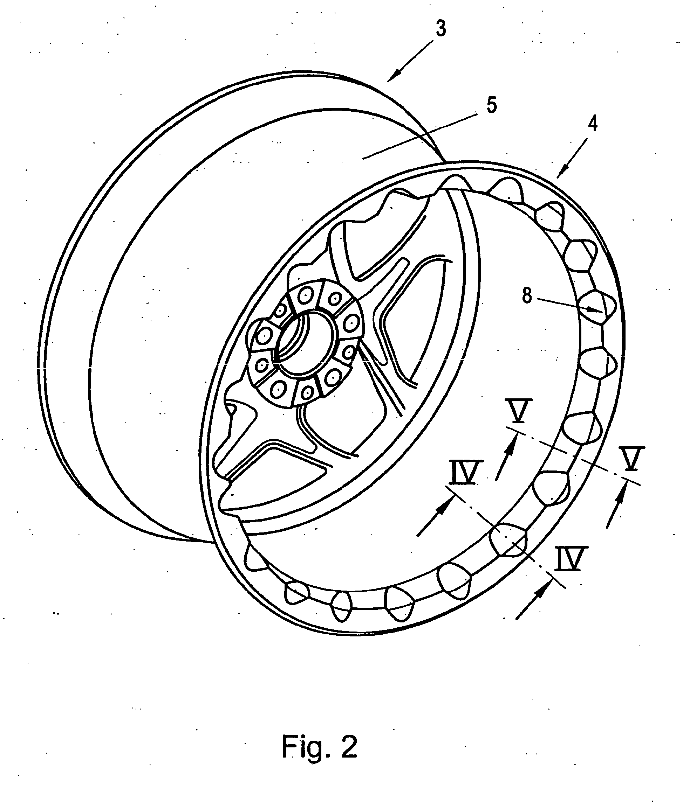

In Fig. 1 und 2 ist ein Gussrad 1 aus einer Leichtmetalllegierung, insbesondere einer Aluminium-Legierung, gezeigt, welches einen Felgenkörper 2 aufweist, an dem ein vorderer Hornbereich 3 anschließt. Der vordere Hornbereich 3 ist mit einem gegenüberliegenden hinteren Hornbereich 4 über ein im Wesentlichen zylindrisch ausgebildetes Felgenbett 5 miteinander verbunden.

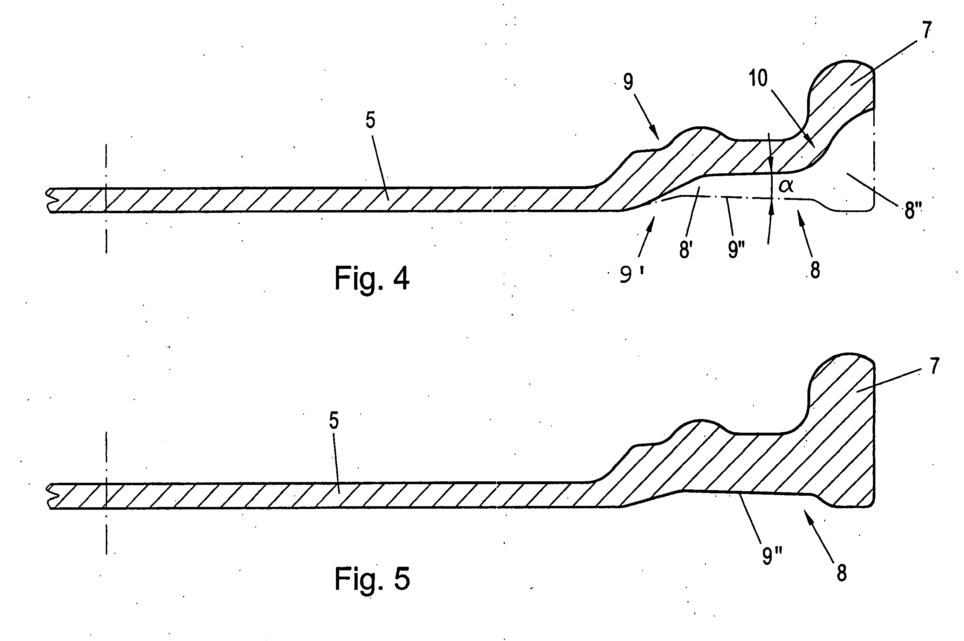

Der hintere Hornbereich 4 weist hierbei, wie insbesondere in Fig. 5 ersichtlich, eine größere Wandstärke als das Felgenbett 5 auf, und weist zudem einen hinteren umfangsseitig verlaufenden Bund 7 auf, welcher sich im Wesentlichen in radialer Richtung des Gussrads 1 erstreckt.

Wie in den Fig. 1 bis 3 ersichtlich, ist im Bereich des hinteren Hornbereichs 4 eine Vielzahl von Materialeinsparungen 8 vorgesehen, um das Gewicht des Gussrads 1 zu verringern. Zusätzlich zu der vorteilhaften Gewichtsreduktion aufgrund der Materialeinsparungen 8 weist das Gussrad 1 hierdurch eine geringere Steifigkeit auf, so dass ein höheres Energieaufnahmevermögen gegeben ist, welches eine verbesserte Anpassung an die zumeist hochdynamische Schlagbelastung eines Gussrads ermöglicht.

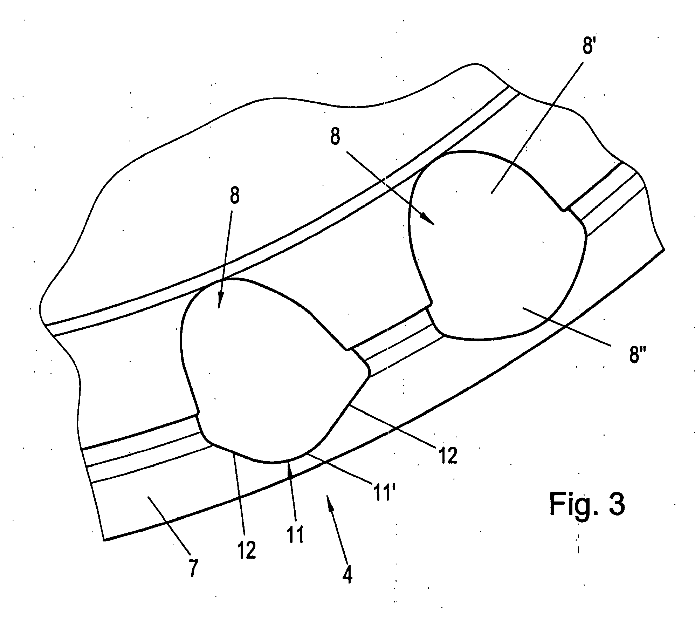

Wie insbesondere in den Fig. 3 und 4 ersichtlich, sind die Materialeinsparungen 8 an einer von einer Seite 9 zur Aufnahme eines Reifens abgewandten Innenseite 9' vorgesehen. Die Materialeinsparungen 8 erstrecken sich hierbei in einem Abschnitt 8' im Wesentlichen parallel zur Längserstreckungsebene des Felgenbetts 5 und in einem hinteren Endabschnitt 8" im Wesentlichen senkrecht hierzu, so dass sich im Querschnitt im Wesentlichen eine L-Form der Materialeinsparungen 8 ergibt. Wie insbesondere in der Schnittdarstellung gemäß Fig. 4 ersichtlich, erhöht sich die Tiefe der Materialeinsparung 8 zunächst durch eine konkave Krümmung des Gussrads 1 geringfügig, wobei sodann ein im Wesentlichen geradliniger Abschnitt, der einen Winkel α zu einer Innenwand 9" im Bereich ohne Materialeinsparungen von ca. 5° aufweist. Der stufenförmige Übergang 10 zu dem hinteren Endabschnitt 8" der Materialeinsparung 8 ist konvex gekrümmt, wobei hierbei vorteilhafter Weise ein Radius von ca. 8 mm vorgesehen ist. Der Abschnitt 8" im Bereich des hinteren Bundes 7 ist sodann wiederum konkav gekrümmt, wobei hier vorteilhafter Weise ein Radius von ca. 25 mm vorgesehen ist.

Wie insbesondere den Fig. 1 und 3 zu entnehmen ist, erstreckt sich der im hinteren Bund 7 angeordnete Abschnitt 8" der Materialeinsparung 8, ausgehend von einem radial außen liegenden Scheitel 11, nach radial innen. Hierbei ist der Scheitelbereich 11' kreisförmig ausgebildet und weist vorzugsweise einen Radius von ca. 15 mm auf. An den kreisförmigen Scheitelabschnitt 11' schließt sodann jeweils ein sich im Wesentlichen geradlinig erweiternder Abschnitt 12 an, wobei die beiden Geraden einen Öffnungswinkel von ca. 75° zueinander einschließen.

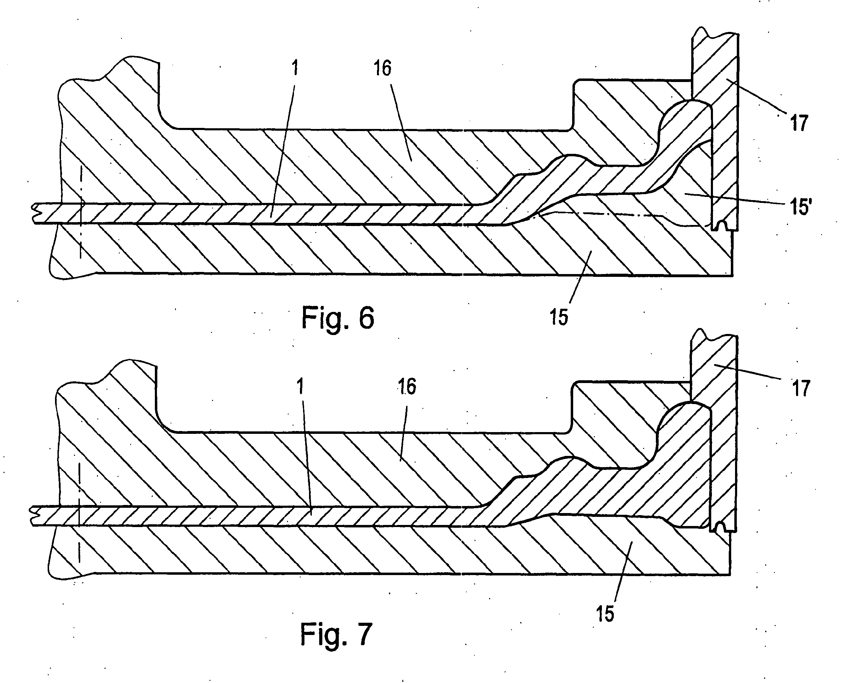

In den Fig. 6 und 7 ist eine aus mehreren Teilen zusammengesetzte Gussform gezeigt, wobei insbesondere ein Kokillenunterteil 15, ein Kokillenoberteil 16 und ein Kokillenseitenteil 17 vorgesehen sind. Wie insbesondere in Fig. 6 ersichtlich, weist der Kokillenunterteil 15 abschnittsweise Materialerhebungen 15' zur Ausbildung der Materialeinsparungen 8 in dem fertiggestellten Gussrad 1 auf.

Wie in Fig. 7 ersichtlich, sind diese Materialerhebungen 15' im Kokillenunterteil 15 nur abschnittsweise vorgesehen, so dass in jenen Bereichen, in denen die Erhebungen 15' vorgesehen sind, die Materialeinsparungen 8 entsprechend dem vorstehend genannten Ausführungsbeispiel erzeugt werden, wobei in dem in Fig. 7 gezeigten Bereich jedoch keine derartige Materialeinsparung 8 vorgesehen ist.

Selbstverständlich können die Materialeinsparungen 8 auch andere Formen aufweisen. Wesentlich ist lediglich, dass durch die Materialeinsparungen 8 im hinteren Hornbereich 4 eine Gewichtsreduzierung des Gussrads 1 erzielt wird, und zugleich die Anforderungen hinsichtlich der Schlagkraftbeanspruchung erfüllt werden.

## Patentansprüche

1. Gussrad (1) mit einem an einen Felgenkörper (2) anschlie-βenden vorderen Hornbereich (3), der über ein Felgenbett (5) mit einem gegenüberliegenden hinteren Hornbereich (4) verbunden ist, der einen umlaufenden, gegenüber dem übrigen Hornbereich (4) verdickten Bund (7) aufweist, wobei der hintere Hornbereich (4) zumindest eine Materialeinsparung (8) aufweist, so dass die Wandstärke des Gussrads (1) im Bereich der Materialeinsparung (8) gegenüber einem umfang-seitig benachbarten Bereich verjüngt ist, und die Materialeinsparung (8) zumindest teilweise im Bereich des umlaufenden Bundes (7) angeordnet ist, **dadurch gekennzeichnet, dass** sich der im hinteren, umlaufenden Bund (7) des hinteren Hornbereichs (4) erstreckende Abschnitt der Materialeinsparung (8) von einem radial außenliegenden Scheitelbereich (11') zu einem frei auslaufenden Ende hin nach radial innen erweitert.

2. Gussrad nach Anspruch 1, **dadurch gekennzeichnet, dass** eine Vielzahl von umfangsseitig gleichmäßig verteilt angeordneten Materialeinsparungen (8) vorgesehen sind.

3. Gussrad nach Anspruch 2, **dadurch gekennzeichnet, dass** alle Materialeinsparungen (8) gleich ausgebildet sind.

4. Gussrad nach einem der Ansprüche 1 bis 3, **dadurch gekennzeichnet, dass** die Materialeinsparungen (8) an einer inneren, von einer Seite (9) zur Aufnahme eines Reifens abgewandten Seite (9') des Gussrads (1) vorgesehen sind.

5. Gussrad nach einem der Ansprüche 1 bis 4, **dadurch gekennzeichnet, dass** die Materialeinsparungen (8) zumindest teilweise eine Längserstreckungsrichtung aufweisen, welche im Wesentlichen parallel zur Erstreckungsebene des Felgenbetts (5) angeordnet ist.

6. Gussrad nach einem der Ansprüche 1 bis 5, **dadurch gekennzeichnet, dass** Materialeinsparungen (8) zumindest teilweise eine Längserstreckungsrichtung aufweisen, welche im Wesentlichen parallel zur Erstreckungsebene eines einen hinteren, umlaufendenden Bund (7) bildenden Abschnitts des hinteren Hornbereichs (4) angeordnet ist.

7. Gussrad nach Anspruch 5 und 6, **dadurch gekennzeichnet, dass** die taschenförmigen Materialeinsparungen (8) im Querschnitt im Wesentlichen L-förmig sind.

8. Gussrad nach einem der Ansprüche 1 bis 7, **dadurch gekennzeichnet, dass** sich die Tiefe der Materialeinsparungen (8) zu dem hinteren Ende des hinteren Hornbereichs (4) erhöht.

9. Gussrad nach Anspruch 8, **dadurch gekennzeichnet, dass** sich die Tiefe der Materialeinsparung (8) ausgehend von einem an das Felgenbett (5) anschließenden Bereich geringfügig erhöht und im Bereich des einen hinteren, umlaufendenden Bund (7) bildenden Abschnitts des hinteren Hornbereichs eine im Wesentlichen stufenförmige Vertiefung (10) der Materialeinsparung (8) vorgesehen ist.

10. Gussrad nach Anspruch 9, **dadurch gekennzeichnet, dass** sich die Tiefe der Materialeinsparung (8) in dem sich geringfügig erhöhenden Bereich, im Wesentlichen geradlinig, inbesondere um ca. 5° erhöht.

11. Gussrad nach einem der Ansprüche 1 bis 10, **dadurch gekennzeichnet, dass** im Bereich der Materialeinsparungen (8) im hinteren, umlaufendenden Bund (7) des hinteren Hornbereichs (4) das Gussrad (1) konkav gekrümmt ist.

12. Gussrad nach Anspruch 11, **dadurch gekennzeichnet, dass** der konkav gekrümmte Abschnitt im Querschnitt im Wesentlichen kreisbogenförmig, vorzugsweise mit einem Radius zwischen 20 und 30 mm, ist.

13. Gussrad nach Anspruch 12, **dadurch gekennzeichnet, dass** der Scheitelbereich (11') kreisbogenförmig, inbesondere mit einem Radius zwischen 10 und 20 mm, ist.

14. Gussrad nach Anspruch 12 oder 13, **dadurch gekennzeichnet, dass** sich die Materialeinsparungen (8) anschließend an den kreisbogenförmigen Scheitelbereich (11') im Wesentlichen geradlinig erweitern.

15. Gussrad nach Anspruch 14, **dadurch gekennzeichnet, dass** die geradlinigen Abschnitte der Materialeinsparungen (8) einen Winkel zwischen 70° und 80°, vorzugsweise von im Wesentlichen 75°, einschließen.

16. Gussform (15, 16, 17) zur Herstellung eines Gussrads (1) mit einem an einen Felgenkörper (2) anschließenden vorderen Hornbereich (3), der über ein Felgenbett (5) mit einem gegenüberliegenden hinteren Hornbereich (4) verbunden ist, der einen umlaufenden, gegenüber dem übrigen Hornbereich (4) verdickten Bund (7) aufweist, wobei die Gussform (15) im hinteren Hornbereich (4) zumindest eine Materialerhebung (15') aufweist, so dass die Wandstärke des Gussrads (1) im Bereich der Materialerhebung (15') der Gussform (15) gegenüber einem umfangseitig benachbarten Bereich verjüngt ist, **dadurch gekennzeichnet, dass** die Gussform (15, 16, 17) zur Herstellung eines Gussrads gemäß einem der Anspruch 1 bis 15 ausgebildet ist.

## Claims

1. A moulded wheel (1), comprising a front flange region (3) adjoining a rim body (2), said front flange region (3) being connected by way of a rim well (5) to an opposite rear flange region (4) that has a peripheral collar (7), which is thickened in comparison to the remainder of the flange region (4), wherein the rear flange region (4) comprises at least one material recess (8) so that the moulded wheel (1) has a reduced wall thickness in comparison to a peripherally neighbouring region in the region of the material recess (8), and the material recess (8) is arranged, at least partially, in the region of the peripheral collar (7), **characterised in that** the portion of the material recess (8) which extends in the rear, peripheral collar (7) of the rear flange region (4) extends radially inwards from a vertex region (11'), which is positioned radially on the outside, to a freely running-out end.

2. The moulded wheel according to claim 1, **characterised in that** a plurality of material recesses (8), arranged circumferentially in an evenly distributed manner, is provided.

3. The moulded wheel according to claim 2, **characterised in that** all material recesses (8) are formed uniformly.

4. The moulded wheel according to any one of claims 1 to 3, **characterised in that** the material recesses (8) are provided on an inner side (9') of the moulded wheel (1) facing away from a side (9) for receiving a tyre.

5. The moulded wheel according to any one of claims 1 to 4, **characterised in that**, at least partially, the material recesses (8) comprise a longitudinal direction of extension which is arranged substantially parallel to the plane of extension of the rim well (5).

6. The moulded wheel according to any one of claims 1 to 5, **characterised in that**, at least partially, material recesses (8) comprise a longitudinal direction of extension which is arranged substantially parallel to the plane of extension of a portion of the rear flange region (4) forming a rear, peripheral collar (7).

7. The moulded wheel according to claims 5 and 6, **characterised in that** the pocket-shaped material recesses (8) have a substantially L-shaped cross-section.

8. The moulded wheel according to any one of claims 1 to 7, **characterised in that** the depth of the material recesses (8) increases towards the rear end of the rear flange portion (4).

9. The moulded wheel according to claim 8, **characterised in that** the depth of the material recess (8) increases slightly starting from a region adjoining the rim well (5) and a substantially stepped deepening (10) of the material recess (8) is provided in the region of the portion of the rear flange region forming a rear, peripheral collar (7).

10. The moulded wheel according to claim 9, **characterised in that** the depth of the material recess (8) increases substantially linearly, in particular by approx. 5°, in the slightly increasing region.

11. The moulded wheel according to any one of claims 1 to 10, **characterised in that** the moulded wheel (1) is curved concavely in the region of the material recesses (8) in the rear, peripheral collar (7) of the rear flange region (4).

12. The moulded wheel according to claim 11, **characterised in that** substantially the concavely curved portion has the shape of a circular arc in its cross-section, preferably with a radius of between 20 and 30 mm.

13. The moulded wheel according to claim 12, **characterised in that** the vertex region (11') has the shape of a circular arc, in particular with a radius of between 10 and 20 mm.

14. The moulded wheel according to claim 12 or 13, **characterised in that** the material recesses (8) adjoining the vertex region (11') in the shape of a circular arc are extending substantially linearly.

15. The moulded wheel according to claim 14, **characterised in that** the linear portions of the material recesses (8) include an angle of between 70° and 80°, preferably of substantially 75°.

16. A mould (15, 16, 17) for creating a moulded wheel (1), comprising a front flange region (3) adjoining a rim body (2), said front flange region (3) being connected by way of a rim well (5) to an opposite rear flange region (4) that has a peripheral collar (7), which is thickened in comparison with the remainder of the rear flange region (4), wherein the mould (15) comprises at least one material elevation (15') in the flange region (4) so that the moulded wheel (1) has a reduced wall thickness in comparison to a peripherally neighbouring region in the region of the material elevation (15') of the mould (15), **characterised in that** the mould (15, 16, 17) is designed for creating a moulded wheel according to any one of claims 1 to 15.

## Revendications

1. Roue coulée (1) avec une partie de rebord avant (3) adjacente à un corps de jante (2), laquelle est reliée par une base de jante (5) à une partie de rebord arrière (4) opposée qui présente un épaulement (7) périphérique renforcé par rapport au reste de la partie de rebord (4), la partie de rebord arrière (4) présentant au moins un évidement de matériau (8), de telle sorte que l'épaisseur de paroi de la roue en fonte (1) est amincie au niveau de l'évidement de matériau (8) par rapport à une zone périphérique adjacente, et l'évidement de matériau (8) étant disposé au moins en partie au niveau de l'épaulement (7) périphérique, **caractérisée en ce que** la partie de l'évidement de matériau (8) qui s'étend dans l'épaulement (7) périphérique arrière de la partie de rebord arrière (4) s'élargit radialement vers l'intérieur, d'une zone de sommet (11') radialement extérieure vers une extrémité libre.

2. Roue coulée selon la revendication 1, **caractérisée en ce qu'**il est prévu une pluralité d'évidements de matériau (8) régulièrement répartis à la périphérie.

3. Roue coulée selon la revendication 2, **caractérisée en ce que** tous les évidements de matériau (8) sont identiques.

4. Roue coulée selon l'une des revendications 1 à 3, **caractérisée en ce que** les évidements de matériau (8) sont prévus sur un côté (9') intérieur de la roue coulée (1), distant d'un côté (9) de réception d'un pneu.

5. Roue coulée selon l'une des revendications 1 à 4, **caractérisée en ce que** les évidements de matériau (8) présentent au moins en partie une direction d'extension longitudinale sensiblement parallèle au plan d'extension de la base de jante (5).

6. Roue coulée selon l'une des revendications 1 à 5, **caractérisée en ce que** les évidements de matériau (8) présentent au moins en partie une direction d'extension longitudinale sensiblement parallèle au plan d'extension d'une zone de la partie de rebord arrière (4) qui forme un épaulement (7) périphérique arrière.

7. Roue coulée selon les revendications 5 et 6, **caractérisée en ce que** les évidements de matériau (8) en forme de poche présentent une section transversale sensiblement en forme de L.

8. Roue coulée selon l'une des revendications 1 à 7, **caractérisée en ce que** la profondeur des évidements de matériau (8) augmente vers l'extrémité arrière de la partie de rebord arrière (4).

9. Roue coulée selon la revendication 8, **caractérisée en ce que** la profondeur de l'évidement de matériau (8) augmente légèrement à partir d'une zone adjacente à la base de jante (5), et **en ce qu'**un retrait (10) sensiblement en forme de gradin de l'évidement de matériau (8) est prévu au niveau de la zone de la partie de rebord arrière qui forme un épaulement (7) périphérique arrière.

10. Roue coulée selon la revendication 9, **caractérisée en ce que** la profondeur de l'évidement de matériau (8) s'accroît sensiblement en ligne droite dans la zone où elle augmente légèrement, en particulier de 5° environ.

11. Roue coulée selon l'une des revendications 1 à 10, ladite roue moulée (1) étant **caractérisée en ce qu'**elle présente une courbure concave au niveau des évidements de matériau (8) dans l'épaulement (7) périphérique arrière de la partie de rebord arrière (4).

12. Roue coulée selon la revendication 11, **caractérisée en ce que** la zone à courbure concave présente une section transversale sensiblement en forme d'arc de cercle, préférentiellement avec un rayon compris entre 20 et 30 mm.

13. Roue coulée selon la revendication 12, **caractérisée en ce que** la zone de sommet (11') est en forme d'arc de cercle, en particulier avec un rayon compris entre 10 et 20 mm.

14. Roue coulée selon la revendication 12 ou la revendication 13, **caractérisée en ce que** les évidements de matériau (8) s'élargissent sensiblement en ligne droite en partant de la zone de sommet (11') en arc de cercle.

15. Roue coulée selon la revendication 14, **caractérisée en ce que** les segments en ligne droite des évidements de matériau (8) incluent un angle compris entre 70° et 80°, préférentiellement de 75° environ.

16. Moule (15, 16, 17) pour la fabrication d'une roue coulée (1) avec une partie de rebord avant (3) adjacente à un corps de jante (2), laquelle est reliée par une base de jante (5) à une partie de rebord arrière (4) opposée qui présente un épaulement (7) périphérique renforcé par rapport au reste de la partie de rebord (4), ledit moule (15) présentant au moins une élévation (15') dans la partie de rebord arrière (4), de telle sorte que l'épaisseur de paroi de la roue coulée (1) est amincie au niveau de l'élévation (15') du moule (15) par rapport à une zone périphérique adjacente, ledit moule (15, 16, 17) étant **caractérisé en ce qu'**il est prévu pour la fabrication d'une roue coulée selon l'une des revendications 1 à 15.
